Europäisches Patentamt

European Patent Office

Office européen des brevets

(19)

(11) **EP 1 362 200 B1**

(12) **EUROPÄISCHE PATENTSCHRIFT**

(45) Veröffentlichungstag und Bekanntmachung des Hinweises auf die Patenterteilung:
**11.08.2004 Patentblatt 2004/33**

(21) Anmeldenummer: **01990330.1**

(22) Anmeldetag: **19.12.2001**

(51) Int Cl.$^7$: **F16H 61/00**

(86) Internationale Anmeldenummer:
**PCT/DE2001/004802**

(87) Internationale Veröffentlichungsnummer:
**WO 2002/055906 (18.07.2002 Gazette 2002/29)**

(54) **SYSTEM, INSBESONDERE EIN ELEKTROHYDRAULISCHES SYSTEM, ZUR EINSTELLUNG DER ANPRESSKRÄFTE EINES STUFENLOS VERSTELLBAREN GETRIEBS**

SYSTEM, PARTICULARLY AN ELECTROHYDRAULIC SYSTEM, FOR ADJUSTING THE PRESSURE FORCE OF A CONTINUOUSLY VARIABLE TRANSMISSION

SYSTEME, NOTAMMENT SYSTEME ELECTROHYDRAULIQUE, SERVANT A REGLER LA FORCE DE PRESSION D'UNE TRANSMISSION A VARIATION CONTINUE

(84) Benannte Vertragsstaaten:
**DE FR GB NL**

(30) Priorität: **13.01.2001 DE 10101356**

(43) Veröffentlichungstag der Anmeldung:
**19.11.2003 Patentblatt 2003/47**

(73) Patentinhaber: **ROBERT BOSCH GMBH**
**70442 Stuttgart (DE)**

(72) Erfinder: **LUH, Joachim**
**74321 Bietigheim-Bissigen (DE)**

(56) Entgegenhaltungen:
**DE-A- 10 017 402        DE-A- 19 519 162**
**DE-A- 19 702 549**

## Beschreibung

Stand der Technik

Die Erfindung geht aus von einem System, insbesondere einem elektrohydraulischen System, zur Einstellung der Anpresskräfte eines stufenlos verstellbaren Getriebes nach dem Oberbegriff des Hauptanspruchs.

Ein derartiges System ist beispielsweise aus der DE 195 19 162 A1 oder der US 5,971,876 bekannt. Es ist eine Einrichtung zur Übersetzungsänderung des Getriebes mit einer Primärdruckkammer und einer Sekundärdruckkammer vorgesehen. Es ist außerdem ein elektrisch ansteuerbares Primärdruckventil zur Einstellung des Drucks in der Primärdruckkammer und ein elektrisch ansteuerbares Sekundärdruckventil zur Einstellung des Drucks in der Sekundärdruckkammer vorhanden. Der Druck der Primärdruckkammer und der Druck der Sekundärdruckkammer ist auf das Sekundärdruckventil führbar.

Bei einem derartigen Getriebe sind die Anpresskräfte so einzustellen, dass kein Rutschen eines Umschlingungsmittels auftritt. Es ist aber auch darauf zu achten, dass die Anpresskräfte und somit der Verschleiß nicht unnötig groß werden. Insbesondere beim Stillstand des Getriebes besteht die Möglichkeit, dass die durch die in der Sekundärdruckkammer erzeugte Anpresskraft der Sekundärscheibe nicht vollständig auf die Primärscheibe übertragen wird. Daher ist eine genaue Einstellung des Drucks in der Primärdruckkammer und der dadurch erzeugten Anpresskraft der Primärscheibe erforderlich. Eine genaue Einstellung des Drucks in der Primärdruckkammer ist nur schwer möglich.

Vorteile der Erfindung

Das erfindungsgemäße System zur Einstellung der Anpresskräfte eines stufenlos verstellbaren Getriebes mit den kennzeichnenden Merkmalen des Hauptanspruchs hat demgegenüber den Vorteil, dass eine genauere Einstellung des Drucks in der Primärdruckkammer möglich ist. Dies gilt insbesondere für den Stillstand des Getriebes. Vorteilhaft ist es auch, dies zu tun, wenn das Getriebe nahezu still steht bzw. sich in der größten Übersetzung befindet.

Weitere Vorteile und vorteilhafte Weiterbildungen des erfindungsgemäßen System zur Einstellung der Anpresskräfte eines stufenlos verstellbaren Getriebes ergeben sich aus den Unteransprüchen und der Beschreibung.

Zeichnung

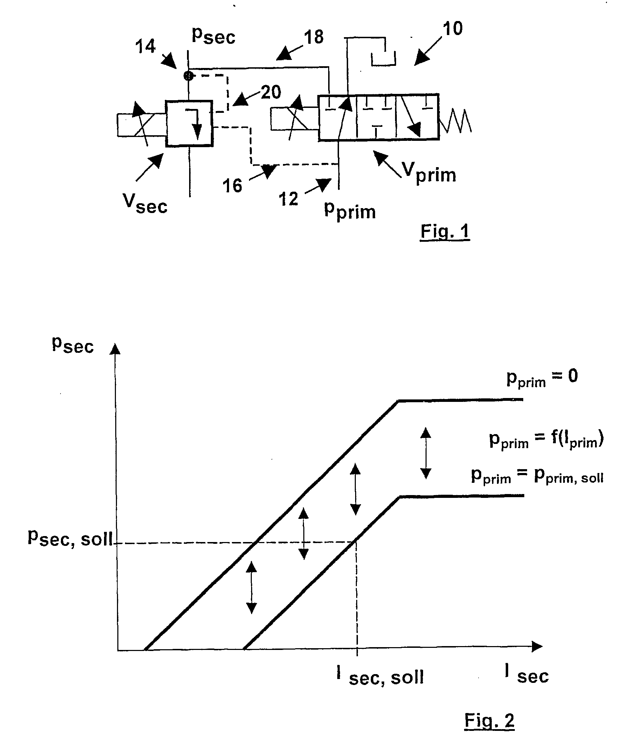

Ein Ausführungsbeispiel der Erfindung ist in der Zeichnung dargestellt und in der nachfolgenden Beschreibung näher erläutert. In der Figur 1 ist ein Ausschnitt aus einem Hydraulikschaltplan gezeigt und in der Figur 2 ein Diagramm, das den Zusammenhang zwischen Drücken und Strömen veranschaulicht.

Beschreibung des Ausführungsbeispiels

In der Figur 1 ist ein System 10 zur Einstellung der Anpresskräfte eines nicht dargestellten stufenlos verstellbaren Getriebes, insbesondere eines Doppelkegelscheiben-Umschlingungsgetriebes, gezeigt. Dieses System 10 und seine Arbeitsweise sind beispielsweise aus der DE 195 19 162 A1 oder der US 5,971,876 bekannt.

Es ist eine ebenfalls nicht gezeigte Einrichtung zur Übersetzungsänderung des Getriebes mit mindestens einer Primärdruckkammer und einer Sekundärdruckkammer vorhanden. Das System 10 ist über eine Leitung 12 mit der Primärdruckkammer und über eine Leitung 14 mit der Sekundärdruckkammer verbunden. Es ist ein elektrisch ansteuerbares Primärdruckventil $V_{prim}$ zur Einstellung des Drucks $p_{prim}$ in der Primärdruckkammer und ein elektrisch ansteuerbares Sekundärdruckventil $V_{sec}$ zur Einstellung des Drucks $p_{sec}$ in der Sekundärdruckkammer vorgesehen. Von der Leitung 14 führt eine Leitung 18 auf das Primärventil Vprim, von wo die bereits erwähnte Leitung 14 zur Primärdruckkammer führt. Der Druck $p_{prim}$ wird über eine Steuerleitung 16 auf eine Druckfläche des Sekundärdruckventil $V_{sec}$ geführt und wirkt, wie aus der Figur 1 ersichtlich ist, der durch die elektrische Ansteuerung erzeugten Kraft entgegen. Die Steuerleitung 16 kann auch über ein zusätzliches - nicht dargestelltes - Ventil schaltbar sein. Der Druck $p_{sec}$ wird über eine Steuerleitung 20 auf eine andere Druckfläche des Sekundärdruckventils $V_{sec}$ geführt.

Im Betrieb des Getriebes, insbesondere im Stillstand, kann der erforderliche Druck $p_{prim,soll}$ in der Primärdruckkammer und der erforderliche Druck $p_{sec,soll}$ in der Sekundärdruckkammer, wie zum Beispiel aus der DE 195 19 162 A1 oder der US 5,971,876 bekannt, über ein Kennfeld bestimmt werden.

Weiterhin wird zur genaueren Einstellung des Drucks $p_{prim}$ in der Primärdruckkammer der Ansteuerstrom $I_{sec}$ des Sekundärventils $V_{sec}$ auf einen erforderlichen Wert $I_{sec,soll}$ gesetzt, der einem vorgegebenen Druck Pprim, soll in der Primärdruckkammer und einem vorgegebenen Druck $p_{sec,soll}$ der Sekundärdruckkammer entspricht. Der Druck $p_{sec}$ in der Sekundärdruckkammer wird darüber hinaus über den Ansteuerstrom $I_{prim}$ des Primärventils $V_{prim}$ geregelt, so dass sich der Druck $p_{prim}$ in der Primärdruckkammer indirekt einstellt. Die Ansteuerströme $I_{prim}$ und $I_{sec}$ entsprechen Stellsignalen für die Ventile $V_{prim}$ und $V_{sec}$. Werden die Ventile $V_{prim}$ und $V_{sec}$ nicht elektrisch angesteuert, sondern hydraulisch, entsprechen die Stellsignale statt dessen Drücken. Eine Regelung über elektrische Stellsignale in Form von Ansteuerströmen ist jedoch geeigneter.

Zur weiter verbesserten Steuerung des Drucks

$p_{prim}$ in der Primärdruckkammer wird der Ansteuerstrom $I_{sec}$ des Sekundärventils $V_{sec}$ gemäß der Formel

$$f(I_{sec}) = k_{prim} * p_{prim,soll} + k_{sec} * p_{sec,soll}$$

als eine Funktion aus der Summe des Produkts einer Konstante $k_{prim}$ des Primärdruckventils $V_{prim}$ und des Drucks $p_{prim,soll}$ der Primärdruckkammer sowie des Produkts einer Konstante $k_{sec}$ des Sekundärdruckventils $V_{sec}$ und des Drucks $p_{sec,soll}$ der Sekundärdruckkammer festgelegt, indem der Druck $p_{sec}$ in der Sekundärdruckkammer eingeregelt wird. Die Konstanten $k_{prim}$ und $k_{sec}$ hängen von verschiedenen Faktoren, wie zum Beispiel der wirksamen Flächen der Ventile $V_{prim}$, $V_{sec}$, an denen die Drücke $p_{prim}$, $p_{sec}$ anstehen, ab.

Weiterhin lässt sich die Regelung des Drucks $p_{prim}$ in der Primärdruckkammer dadurch verbessern, dass der Druck $p_{sec}$ in der Sekundärdruckkammer mit dem Ansteuerstrom $I_{prim}$ des Primärdruckventils geregelt wird. Dies stellt eine Umkehrung der Ansteuerung der Druckkammern gegenüber dem normalen Betrieb dar, was insbesondere im Stillstand des Getriebes vorteilhaft ist. Weiterhin ist dies vorteilhaft, wenn die Einstellung der Anpresskräfte erfolgt, wenn das Getriebe nahezu still steht und/oder sich in der größten Übersetzung befindet.

Hierzu wird vorzugsweise der erforderliche und der gemessene Druck $p_{sec,soll}$ bzw. $p_{sec}$ in der Sekundärdruckkammer einem Regler, wie zum Beispiel einem PID-Regler zugeführt, dessen Ergebnis zur Bestimmung des Ansteuerstroms $I_{prim}$ des Primärdruckventils verwendet wird.

Weiterhin kann die Regelung Mittel zum Beispiel in Form einer Steuerung mit einem entsprechenden Programm einen Adaptionsalgorithmus enthalten, mit dem der Zusammenhang zwischen dem vorgegebenen Druck in der Primärdruckkammer $P_{prim,soll}$ und dem vorgegebenen Druck in der Sekundärdruckkammer $p_{sec,soll}$ mit dem Stellsignal, d.h. dem Ansteuerstrom $I_{sec}$ des Sekundärventils im laufenden Betrieb gelernt wird. Das kann vorzugsweise in einer Betriebsart erfolgen, bei der der Primärdruck $p_{prim}$ annähernd gleich dem Sekundärdruck $p_{sec}$ ist oder bei der der Primärdruck $p_{prim}$ Null ist. Zur Einstellung des Betriebszustandes, in dem der Druck ($p_{prim}$) in der Primärdruckkammer annähernd gleich dem Druck ($p_{sec}$) in der Sekundärdruckkammer ist, wird das Primärdruckventil ($V_{sec}$) mit Hilfe des Stellsignals ($I_{prim}$) in Richtung Sekundärdruck geöffnet. Zur Einstellung des Betriebszustandes, in dem der Druck ($p_{prim}$) in der Primärdruckkammer Null ist, wird das Primärdruckventil ($V_{sec}$) mit Hilfe des Stellsignals ($I_{prim}$) in Richtung Niederdruck geöffnet.

In einer vorteilhaften Ausgestaltung wird genau ein Offset-Wert bzw. Offset-Stellsignal $I_{sec,offset}$ des Stellsignals $I_{sec}$ adaptiert, bei dem sich ein vorgegebener Druck $p_{prim,soll}$ in der Primärdruckkammer und ein vorgegebener Druck $p_{sec,soll}$ in der Sekundärdruckkammer einstellt. Die Adaption erfolgt durch Vergleich des vorgegebenen Drucks $p_{sec,soll}$ in der Sekundärdruckkammer mit dem gemessenen Druck $p_{sec}$ in der Sekundärdruckkammer. D.h. zur Ermittlung des Zusammenhangs zwischen dem Stellsignal ($I_{sec}$) des Sekundärventils ($V_{sec}$) und dem vorgegebenen Druck ($p_{prim,soll}$) in der Primärdruckkammer und einem vorgegebenen Druck ($p_{sec,soll}$) der Sekundärdruckkammer wird der gemessene Sekundärdruck ($p_{sec}$) mit einem vorgegebenen Druck ($p_{sec,soll}$) der Sekundärdruckkammer verglichen. In Abhängigkeit von dem Vergleich wird der Zusammenhang zwischen dem Stellsignal ($I_{sec}$) des Sekundärventils ($V_{sec}$) und dem vorgegebenen Druck ($p_{prim,soll}$) in der Primärdruckkammer und einem vorgegebenen Druck ($p_{sec,soll}$) der Sekundärdruckkammer korrigiert. Dadurch kann das erforderliche Stellsignal $I_{sec}$ ständig adaptiert, d.h. an den jeweils idealen Wert zur Einstellung des Drucks $p_{prim}$ in der Primärdruckkammer angepasst werden. Dies ist gegenüber der Verwendung eines einzigen festen Werts zum Beispiel aus einem festgelegten Kennfeld flexibler. Dadurch wird die Einstellung des Drucks $p_{prim}$ genauer.

In der Figur 2 ist ein Diagramm gezeigt, aus dem der Zusammenhang zwischen den Strömen $I_{prim}$ sowie $I_{sec}$ und den Drücken $p_{rim}$ sowie $p_{sec}$ deutlicher hervorgeht und aus dem leichter erkennbar ist, wie der Druck $p_{sec}$ in der Sekundärdruckkammer über das Stellsignal $I_{prim}$ des Primärventils $V_{prim}$ geregelt wird und sich dabei der Druck $p_{prim}$ in der Primärdruckkammer indirekt einstellt. Dabei kommt es vor allem auf das von den Steuerleitungen 16 und 20 erzeugte Druckverhältnis am Sekundärdruckventil $V_{sec}$ an.

Über die Steuerleitung 20, die den Druck $p_{sec}$ an das Sekundärdruckventil $V_{sec}$ zurückführt, ist eindeutig festgelegt, wie die Druckverhältnisse sind, da eine über die elektrische Ansteuerung erzeugte Kraft der durch den rückgeführten Druck erzeugten Gegenkraft entgegenwirkt. Bei dem Primärdruckventil $V_{prim}$ ist dies nicht so, da der Druck $p_{prim}$ nicht auf das Primärdruckventil $V_{prim}$ zurückgeführt wird.

Aus dem Diagramm geht hervor, dass der Druck $p_{sec}$, wenn das Primärdruckventil Vprim den Druck aus der Primärdruckkammer in den Tank leitet, entlang der Linie $p_{prim} = 0$ verläuft, bis der maximal erzeugbare Druck für $p_{sec}$ erreicht ist. Über den Strom $I_{prim}$ lässt sich davon ausgehend der Druck $p_{prim}$ auf den Wert $p_{prim,soll}$ einstellen. Dies wird verdeutlicht durch die Doppelpfeile in der Figur 2. Die Linie wird parallel verschoben, bis der gewünschte Druck $p_{prim} = p_{prim,soll}$ erreicht ist.

Nun wird im Betrieb, wie bereits erwähnt, der erforderliche Druck $p_{sec,soll}$ in der Sekundärdruckkammer - wie zum Beispiel aus der DE 195 19 162 A1 oder der US 5,971,876 bekannt - über ein Kennfeld bestimmt. Dann wird der Strom $I_{sec}$ auf den hierfür erforderlichen Wert $I_{sec,soll}$ gesetzt und dabei belassen. Anschließend wird über den Strom $I_{prim}$ das Primärdruckventil $V_{prim}$ betätigt, wodurch sich auch der Druck $p_{prim}$ ändert. Der

Druck $p_{prim}$ wird über die Steuerleitung 20 auf das Sekundärdruckventil $V_{sec}$ geführt. Dadurch verstellt sich das Sekundärdruckventil $V_{sec}$. Somit verändert sich der Druck $p_{sec}$, was sich wieder auf den Druck $p_{prim}$ auswirkt. Infolgedessen stellt sich der Druck $p_{prim}$ indirekt ein. Somit wird also über den Strom $I_{prim}$ der Druck $p_{sec}$ in der Sekundärdruckkammer geregelt und der Druck $p_{prim}$ in der Primärdruckkammer stellt sich indirekt ein.

**Patentansprüche**

1. System (10), insbesondere elektrohydraulisches System (10), zur Einstellung der Anpresskräfte eines stufenlos verstellbaren Getriebes, insbesondere eines Doppelkegelscheiben-Umschlingungsgetriebes, das eine Einrichtung zur Übersetzungsänderung des Getriebes mit mindestens einer Primärdruckkammer und einer Sekundärdruckkammer aufweist, mit einem elektrisch ansteuerbaren Primärdruckventil ($V_{prim}$) zur Einstellung des Drucks in der Primärdruckkammer und einem elektrisch ansteuerbaren Sekundärdruckventil ($V_{sec}$) zur Einstellung des Drucks in der Sekundärdruckkammer, wobei der Druck ($p_{prim}$) der Primärdruckkammer und der Druck ($p_{sec}$) der Sekundärdruckkammer auf das Sekundärdruckventil ($V_{sec}$) geführt sind, **dadurch gekennzeichnet, dass** das Stellsignal ($I_{sec}$) des Sekundärventils ($V_{sec}$) auf einen Wert ($I_{sec,soll}$) gesetzt wird, der einem vorgegeben Druck ($p_{prim,soll}$) in der Primärdruckkammer und einem vorgegebenen Druck ($p_{sec,soll}$) in der Sekundärdruckkammer entspricht und der Druck ($p_{sec}$) in der Sekundärdruckkammer über das Stellsignal ($I_{prim}$) des Primärventils ($V_{prim}$) geregelt wird, so dass sich der Druck ($P_{prim}$) in der Primärdruckkammer indirekt einstellt.

2. System (10) nach Anspruch 1, **dadurch gekennzeichnet, dass** zur Steuerung des Drucks ($p_{prim}$) in der Primärdruckkammer das Stellsignal ($I_{sec}$) des Sekundärventils ($V_{sec}$) als eine Funktion aus der Summe des Produkts einer Konstante ($k_{prim}$) des Primärdruckventils ($V_{sec}$) und des Drucks ($p_{prim,soll}$) der Primärdruckkammer sowie des Produkts einer Konstante ($k_{sec}$) des Sekundärdruckventils ($V_{sec}$) und des Drucks ($p_{sec,soll}$) der Sekundärdruckkammer festgelegt wird, indem der Druck ($p_{sec}$) in der Sekundärdruckkammer eingeregelt wird.

3. System (10) nach Anspruch 1 oder 2, **dadurch gekennzeichnet, dass** der Druck ($p_{sec}$) in der Sekundärdruckkammer mit dem Stellsignal ($I_{prim}$) des Primärdruckventils ($V_{prim}$) geregelt wird.

4. System (10) nach einem der Ansprüche 1 bis 3, **dadurch gekennzeichnet, dass** der erforderliche Druck ($p_{sec,soll}$) und der gemessene Druck ($p_{sec}$) in der Sekundärdruckkammer einem Regler zugeführt werden, dessen Ergebnis zur Bestimmung des Stellsignals ($I_{prim}$) des Primärdruckventils ($V_{prim}$) verwendet wird.

5. System (10) nach einem der Ansprüche 1 bis 4, **dadurch gekennzeichnet, dass** die Einstellung der Anpresskräfte beim Stillstand des Getriebes erfolgt.

6. System (10) nach einem der Ansprüche 1 bis 5, **dadurch gekennzeichnet, dass** zur Einstellung des Drucks ($p_{sec}$) in der Sekundärdruckkammer auf den vorgegebenen Druck ($p_{sec,soll}$) in der Sekundärdruckkammer ein PID-Regler verwendet wird.

7. System (10) nach einem der Ansprüche 1 bis 6, **dadurch gekennzeichnet, dass** Mittel vorgesehen sind, mit denen der Zusammenhang zwischen dem Stellsignal ($I_{sec}$) des Sekundärventils ($V_{sec}$) und dem vorgegebenen Druck ($p_{prim,soll}$) in der Primär- und einem vorgegebenen Druck ($p_{sec,soll}$) der Sekundärdruckkammer während des Betriebs im Sinne einer Adaption verändert wird.

8. System (10) nach Anspruch 7, **dadurch gekennzeichnet, dass** die Ermittlung des Zusammenhangs zwischen dem Stellsignal ($I_{sec}$) des Sekundärventils ($V_{sec}$) und dem vorgegebenen Druck ($p_{prim,soll}$) in der Primärdruckkammer und einem vorgegebenen Druck ($p_{sec,soll}$) der Sekundärdruckkammer in einem Betriebszustand erfolgt, in dem der Druck ($p_{prim}$) in der Primärdruckkammer Null ist.

9. System (10) nach Anspruch 8, **dadurch gekennzeichnet, dass** zur Einstellung des Betriebszustandes, in dem der Druck ($p_{prim}$) in der Primärdruckkammer Null ist, das Primärdruckventil ($V_{sec}$) mit Hilfe des Stellsignals ($I_{prim}$) in Richtung Niederdruck geöffnet wird.

10. System (10) nach Anspruch 7, **dadurch gekennzeichnet, dass** die Ermittlung des Zusammenhangs zwischen dem Stellsignal ($I_{sec}$) des Sekundärventils ($V_{sec}$) und dem vorgegebenen Druck ($p_{prim,soll}$) in der Primärdruckkammer und einem vorgegebenen Druck ($p_{sec,soll}$) der Sekundärdruckkammer in einem Betriebszustand erfolgt, in dem der Druck ($p_{prim}$) in der Primärdruckkammer annähernd gleich dem Druck ($p_{sec}$) in der Sekundärdruckkammer ist.

11. System (10) nach Anspruch 10, **dadurch gekennzeichnet, dass** zur Einstellung des Betriebszustandes, in dem der Druck ($p_{prim}$) in der Primärdruckkammer annähernd gleich dem Druck ($p_{sec}$) in der Sekundärdruckkammer ist, das Primärdruckventil ($V_{sec}$) mit Hilfe des Stellsignals ($I_{prim}$) in Richtung Sekundärdruck geöffnet wird.

**12.** System (10) nach einem der Ansprüche 7 bis 11, **dadurch gekennzeichnet, dass** die Ermittlung des Zusammenhangs zwischen dem Stellsignal ($I_{sec}$) des Sekundärventils ($V_{sec}$) und dem vorgegebenen Druck ($p_{prim,soll}$) in der Primärdruckkammer und einem vorgegebenen Druck ($p_{sec,soll}$) der Sekundärdruckkammer in Form der Bestimmung eines Offset-Stellsignals ($I_{sec,offset}$) erfolgt.

**13.** System (10) nach einem der Ansprüche 7 bis 12, **dadurch gekennzeichnet, dass** zur Ermittlung des Zusammenhangs zwischen dem Stellsignal ($I_{sec}$) des Sekundärventils ($V_{sec}$) und dem vorgegebenen Druck ($p_{prim,soll}$) in der Primärdruckkammer und einem vorgegebenen Druck ($p_{sec,soll}$) in der Sekundärdruckkammer der gemessene Sekundärdruck ($p_{sec}$) mit einem vorgegebenen Druck ($p_{sec,soll}$) der Sekundärdruckkammer verglichen wird und in Abhängigkeit von dem Vergleich der Zusammenhang zwischen dem Stellsignal ($I_{sec}$) des Sekundärventils ($V_{sec}$) und dem vorgegebenen Druck ($p_{prim,soll}$) in der Primärdruckkammer und einem vorgegebenen Druck ($p_{sec,soll}$) der Sekundärdruckkammer korrigiert wird.

**14.** System (10) nach einem der Ansprüche 1 bis 13, **dadurch gekennzeichnet, dass** die Einstellung der Anpresskräfte erfolgt, wenn das Getriebe nahezu still steht und/oder sich in der größten Übersetzung befindet.

**Claims**

**1.** System (10), in particular electrohydraulic system (10), for setting the pressure forces of an infinitely adjustable transmission, in particular a variable-pitch-sheave flexible drive mechanism which has a device for changing the transmission ratio of the transmission having at least one primary pressure chamber and a secondary pressure chamber, having an electrically actuable primary pressure valve ($V_{prim}$) for setting the pressure in the primary pressure chamber and an electrically actuable secondary pressure valve ($V_{sec}$) for setting the pressure in the secondary pressure chamber, the pressure ($p_{prim}$) of the primary pressure chamber and the pressure ($p_{sec}$) of the secondary pressure chamber being conveyed to the secondary pressure valve ($V_{sec}$), **characterized in that** the actuation signal ($I_{sec}$) of the secondary valve ($V_{sec}$) is set to a value ($I_{sec,setp}$) which corresponds to a predefined pressure ($V_{prim,setp}$) in the primary pressure chamber and to a predefined pressure ($p_{sec,setp}$) in the secondary pressure chamber, and the pressure ($p_{sec}$) in the secondary pressure chamber is controlled by means of the actuation signal ($Ip_{rim}$) of the primary valve ($V_{prim}$) so that the pressure ($p_{prim}$) in the primary pressure chamber is set indirectly.

**2.** System (10) according to Claim 1, **characterized in that**, in order to control the pressure ($p_{prim}$) in the primary pressure chamber, the actuation signal ($I_{sec}$) of the secondary valve ($V_{sec}$) is defined as a function of the sum of the product of a constant ($k_{prim}$) of the primary pressure valve ($V_{sec}$) and of the pressure ($p_{prim,setp}$) of the primary pressure chamber as well as of the product of a constant ($k_{sec}$) of the secondary pressure valve ($V_{sec}$) and of the pressure ($p_{sec,setp}$) of the secondary pressure chamber by virtue of the fact that the pressure ($p_{sec}$) is applied to the secondary pressure chamber.

**3.** System (10) according to Claim 1 or 2, **characterized in that** the pressure ($p_{sec}$) in the secondary pressure chamber is controlled by means of the actuation signal ($I_{prim}$) of the primary pressure valve ($V_{prim}$).

**4.** System (10) according to one of Claims 1 to 3, **characterized in that** the necessary pressure ($p_{sec,setp}$) and the measured pressure ($p_{sec}$) in the secondary pressure chamber are fed to a controller whose result is used to acquire the actuation signal ($I_{prim}$) of the primary pressure valve ($V_{prim}$).

**5.** System (10) according to one of Claims 1 to 4, **characterized in that** the pressure forces are set when the transmission is in a stationary state.

**6.** System (10) according to one of Claims 1 to 5, **characterized in that** a PID controller is used for setting the pressure ($p_{sec}$) in the secondary pressure chamber to the predefined pressure ($p_{sec,setp}$) in the secondary pressure chamber.

**7.** System (10) according to one of Claims 1 to 6, **characterized in that** means are provided with which the relationship between the actuation signal ($I_{sec}$) of the secondary:valve ($V_{sec}$) and the predefined pressure ($p_{prim,setp}$) in the primary pressure chamber and a predefined pressure ($p_{sec, setp}$) of the secondary pressure chamber is changed during operation in the sense of an adaptation.

**8.** System (10) according to Claim 7, **characterized in that** the relationship between the actuation signal ($I_{sec}$) of the secondary valve ($V_{sec}$) and the predefined pressure ($p_{prim,setp}$) in the primary pressure chamber and a predefined pressure ($p_{sec,setp}$) of the secondary pressure chamber is acquired in an operating state in which the pressure ($p_{prim}$) in the primary pressure chamber is zero.

**9.** System (10) according to Claim 8, **characterized in that**, in order to set the operating state in which

the pressure ($p_{prim}$) in the primary pressure chamber is zero, the primary pressure valve ($V_{sec}$) is opened in the direction of low pressure using the actuation signal (Iprim).

10. System (10) according to Claim 7, **characterized in that** the relationship between the actuation signal ($I_{sec}$) of the secondary valve ($V_{sec}$) and the predefined pressure ($p_{prim,setp}$) in the primary pressure chamber and a predefined pressure ($p_{sec,setp}$) of the secondary pressure chamber is acquired in an operating state in which the pressure ($p_{prim}$) in the primary pressure chamber is approximately equal to the pressure ($p_{sec}$) in the secondary pressure chamber.

11. System (10) according to Claim 10, **characterized in that**, in order to set the operating state in which the pressure ($p_{prim}$) in the primary pressure chamber is approximately equal to the pressure ($p_{sec}$) in the secondary pressure chamber, the primary pressure valve ($V_{sec}$) is opened in the direction of secondary pressure using the actuation signal ($I_{prim}$).

12. System (10) according to one of Claims 7 to 11, **characterized in that** the relationship between the actuation signal ($I_{sec}$) of the secondary valve ($V_{sec}$) and the predefined pressure ($p_{prim,setp}$) in the primary pressure chamber and a predefined pressure ($p_{sec,setp}$) of the secondary pressure chamber is acquired by determining an offset actuation signal ($I_{sec,offset}$)

13. System (10) according to one of Claims 7 to 12, **characterized in that**, in order to acquire the relationship between the actuation signal ($I_{sec}$) of the secondary valve ($V_{sec}$) and the predefined pressure ($p_{prim,setp}$) in the primary pressure chamber and a predefined pressure ($p_{sec,setp}$) in the secondary pressure chamber, the measured secondary pressure ($p_{sec}$) is compared with a predefined pressure ($p_{sec,setp}$) of the secondary pressure chamber and the relationship between the actuation signal ($I_{sec}$) of the secondary valve ($V_{sec}$) and the predefined pressure ($p_{prim,setp}$) in the primary pressure chamber and a predefined pressure ($p_{sec,setp}$) of the secondary pressure chamber is corrected as a function of the comparison.

14. System (10) according to one of Claims 1 to 13, **characterized in that** the pressure forces are set when the transmission is virtually stationary and/or has the largest transmission ratio.

## Revendications

1. Système (10), notamment système électrohydraulique (10), servant à régler les forces de pression d'une transmission à variation continue, notamment d'une transmission à courroie à double disque conique, qui présente un dispositif pour modifier le rapport de transmission comprenant au moins une chambre de pression primaire et une chambre de pression secondaire, avec une soupape de pression primaire ($V_{prim}$) à commande électrique pour régler la pression dans la chambre de pression primaire et une soupape de pression secondaire ($V_{sec}$) à commande électrique pour régler la pression dans la chambre de pression secondaire, la pression ($p_{prim}$) de la chambre de pression primaire et la pression ($p_{sec}$) de la chambre de pression secondaire étant appliquées sur la soupape de pression secondaire ($V_{sec}$).
**caractérisé en ce que**
le signal de réglage ($I_{sec}$) de la soupape secondaire ($V_{sec}$) est placé sur une valeur ($I_{sec,consigne}$) qui correspond à une pression prédéterminée ($p_{prim,consigne}$) dans la chambre de pression primaire et à une pression prédéterminée ($p_{sec,consigne}$) dans la chambre de pression secondaire, et la pression ($p_{sec}$) dans la chambre de pression secondaire est réglée par le signal de réglage ($I_{prim}$) de la soupape primaire ($V_{prim}$) de telle sorte que la pression ($p_{prim}$) s'établisse indirectement dans la chambre de pression primaire.

2. Système (10) selon la revendication 1,
**caractérisé en ce que**
pour commander la pression ($p_{prim}$) dans la chambre de pression primaire, le signal de réglage ($I_{sec}$) de la soupape secondaire ($V_{sec}$) est déterminé comme une fonction de la somme du produit d'une constante ($k_{prim}$) de la soupape de pression primaire ($V_{sec}$) et de la pression ($p_{prim, consigne}$) de la chambre de pression primaire, ainsi que du produit d'une constante ($k_{sec}$) de la soupape de pression secondaire ($V_{sec}$) et de la pression ($p_{sec,consigne}$) de la chambre de pression secondaire, en ajustant la pression ($p_{sec}$) dans la chambre de pression secondaire.

3. Système (10) selon la revendication 1 ou 2,
**caractérisé en ce que**
la pression ($p_{sec}$) dans la chambre de pression secondaire est réglée avec le signal de réglage ($I_{prim}$) de la soupape de pression primaire ($V_{prim}$).

4. Système (10) selon l'une quelconque des revendications 1 à 3,
**caractérisé en ce que**
la pression ($p_{sec,consigne}$) nécessaire et la pression ($p_{sec}$) mesurée dans la chambre de pression secondaire sont amenées vers un régulateur dont le résultat est utilisé pour déterminer le signal de réglage

($I_{prim}$) de la soupape de pression primaire ($V_{prim}$).

**5.** Système (10) selon l'une quelconque des revendications 1 à 4,
**caractérisé en ce que**
le réglage des forces de pression est réalisé à l'arrêt de la transmission.

**6.** Système (10) selon l'une quelconque des revendications 1 à 5,
**caractérisé en ce que**
l'on utilise un régulateur PID pour le réglage de la pression ($p_{sec}$) dans la chambre de pression secondaire sur la pression prédéterminée ($p_{sec,consigne}$) dans la chambre de pression secondaire.

**7.** Système (10) selon l'une quelconque de revendications 1 à 6,
**caractérisé en ce que**
des moyens sont prévus par lesquels la relation entre le signal de réglage ($I_{sec}$) de la soupape secondaire ($V_{sec}$) et la pression prédéterminée ($p_{prim,consigne}$) dans la chambre de pression primaire et une pression prédéterminée ($p_{sec,consigne}$) dans la chambre de pression secondaire est modifiée pendant le fonctionnement en vue d'une adaptation.

**8.** Système (10) selon la revendication 7,
**caractérisé en ce que**
la détermination de la relation entre le signal de réglage ($I_{sec}$) de la soupape secondaire ($V_{sec}$) et la pression prédéterminée ($p_{prim,consigne}$) dans la chambre de pression primaire et une pression prédéterminée ($p_{sec,consigne}$) dans la chambre de pression secondaire est réalisée dans un état de fonctionnement dans lequel la pression ($P_{prim}$) dans la chambre de pression primaire est égale à zéro.

**9.** Système (10) selon la revendication 8,
**caractérisé en ce que**
pour le réglage de l'état de fonctionnement, dans lequel la pression ($p_{prim}$) dans la chambre de pression primaire est égale à zéro, la soupape de pression primaire ($V_{sec}$) est ouverte dans le sens basse pression à l'aide du signal de réglage ($I_{prim}$).

**10.** Système (10) selon la revendication 7,
**caractérisé en ce que**
la détermination de la relation entre le signal de réglage ($I_{sec}$) de la soupape secondaire ($V_{sec}$) et la pression prédéterminée ($p_{prim,consigne}$) dans la chambre de pression primaire et une pression prédéterminée ($p_{sec.consigne}$) dans la chambre de pression secondaire est réalisée dans un état de fonctionnement dans lequel la pression ($p_{prim}$) dans la chambre de pression primaire est approximativement égale à la pression ($p_{sec}$) dans la chambre de pression secondaire.

**11.** °) Système (10) selon la revendication 10,
**caractérisé en ce que**
pour le réglage de l'état de fonctionnement dans lequel la pression ($p_{prim}$) dans la chambre de pression primaire est approximativement égale à la pression ($p_{sec}$) dans la chambre de pression secondaire, la soupape de pression primaire ($V_{sec}$) est ouverte dans le sens pression secondaire à l'aide du signal de réglage ($I_{prim}$).

**12.** Système (10) selon l'une quelconque des revendications 7 à 11,
**caractérisé en ce que**
la détermination de la relation entre le signal de réglage ($I_{sec}$) de la soupape secondaire ($V_{sec}$) et la pression prédéterminée ($p_{prim,consigne}$) dans la chambre de pression primaire et une pression prédéterminée ($p_{sec.consigne}$) de la chambre de pression secondaire est réalisée sous la forme d'une détermination d'un signal de réglage offset ($I_{sec,offset}$).

**13.** Système (10) selon l'une quelconque des revendications 7 à 12,
**caractérisé en ce que**
pour la détermination de la relation entre le signal de réglage ($I_{sec}$) de la soupape secondaire ($V_{sec}$) et la pression prédéterminée ($p_{prim}$) dans la chambre de pression primaire et une pression prédéterminée ($p_{sec,consigne}$) dans la chambre de pression secondaire, la pression secondaire ($p_{sec}$) mesurée est comparée à une pression prédéterminée ($p_{sec,consigne}$) de la chambre de pression secondaire, et en fonction de la comparaison on corrige la relation entre le signal de réglage ($I_{sec}$) de la soupape secondaire ($V_{sec}$) et la pression prédéterminée ($p_{prim.consigne}$) dans la chambre de pression primaire et une pression prédéterminée ($p_{sec,consigne}$) dans la chambre de pression secondaire.

**14.** Système (10) selon l'une quelconque des revendications 1 à 13,
**caractérisé en ce que**
le réglage des forces de pression est réalisé lorsque la transmission est pratiquement à l'arrêt et/ou que le rapport est maximal.

Fig. 1

$p_{prim} = 0$

$p_{prim} = f(I_{prim})$

$p_{prim} = p_{prim, soll}$

Fig. 2